# EUROPÄISCHE PATENTANMELDUNG

(11) **EP 4 299 709 A1**
(43) Veröffentlichungstag der Anmeldung: **03.01.2024**
(21) Anmeldenummer: 23173361.9
(22) Anmeldetag: 15.05.2023
(51) Int. Cl.: C12C 13/00, C12C 7/22

(54) **GETRÄNKEHERSTELLUNGSANLAGE MIT SEPARATER EISWASSERKÜHLVORRICHTUNG**

(30) Priorität: 30.06.2022 DE 102022116300
(71) Anmelder: Steinecker GmbH, 85356 Freising-Attaching (DE)
(72) Erfinder: KAMMERLOHER, Helmut, 85356 Freising-Attaching (DE)
(74) Vertreter: Grünecker Patent- und Rechtsanwälte PartG mbB

(57) **Zusammenfassung**

Die vorliegende Erfindung betrifft Anlage zur Getränkeherstellung, insbesondere Bierherstellung, mit einer ersten Kühlvorrichtung, die zum Kühlen zumindest eines Mediums auf minimal eine erste Temperatur ausgebildet ist, und einer zweiten Kühlvorrichtung, die ausschließlich zum Erzeugen von Eiswasser durch Kühlen von Wasser auf minimal eine zweite Temperatur ausgebildet ist, die oberhalb der ersten Temperatur liegt, und die separat von der ersten Kühlvorrichtung ausgebildet ist.

## Beschreibung

### Gebiet der Erfindung

Die vorliegende Erfindung betrifft eine Anlage zur Getränkeherstellung, beispielsweise eine Brauerei, in der Eiswasser mithilfe einer speziell für die Erzeugung von Eiswasser bereitgestellten Eiswasserkühlvorrichtung erzeugt wird.

### Stand der Technik

Bei der Getränkeherstellung finden verschiedene Aufheiz- und Abkühlvorgänge statt, die einen wesentlichen Kostenfaktor durch den damit verbundenen Energieverbrauch darstellen. In einer Brauerei gehört die Kälteerzeugung mit etwa 40 % Anteil, teilweise sogar bis zu 55 % Anteil, zu den größten Stromabnehmern. Allein die Würzekühlung kann mehr als ein Drittel des Strombedarfs des Kältebedarfs in Anspruch nehmen.

Insbesondere müssen für verschiedene Verbraucher und verschiedene Kühlvorgänge Kaltwasser beziehungsweise Eiswasser vorgehalten werden. So werden beispielsweise in Brauereien Kaltwasser, beispielsweise mit einer Temperatur zwischen 10 °C und 30 °C, und Eiswasser, beispielsweise mit einer Temperatur zwischen 2 °C und 5 °C, benötigt. Insbesondere die Bereitstellung von Eiswasser mit relativ hohen Volumina ist sehr kostenintensiv.

Zum Erzeugen von Kälte, beispielsweise für die Erzeugung von Eiswasser, ist im Stand der Technik eine zentrale Kälteanlage vorgesehen, die beispielsweise in einer Brauerei einen Würzekühler, einen Jungbierkühler, einen Biertiefkühler vor der Filtration des Bieres, eine CO₂-Rückgewinriungsanlage, Gärtanks, Lagertanks, Drucktanks, etc. mit Kälte versorgt. Diese zentrale Kälteanlage muss also verschiedenste Verbraucher auf verschiedensten Temperaturniveaus mit Kälte versorgen, wobei sie auf die minimal erforderliche Temperatur ausgelegt sein muss, und es garantiert werden muss, dass die zentrale Kälteanlage den denkbar maximalen Kältebedarf unter Berücksichtigung von Bedarfsüberschneidungen einzelner Verbraucher mit einem entsprechenden Sicherheitspuffer gewährleisten kann. Da die zentrale Kälteanlage die verschiedensten Verbraucheranforderungen zu erfüllen hat, ist der erreichbare Nutzungsgrad oder die Leistungszahl beziehungsweise die Leistungsziffer gerade im Teillastbetrieb der Kälteanlage relativ niedrig, beispielsweise ein EER (Energy Efficiency Ratio = das Verhältnis von Kältestrom zu Antriebsleistung) von < 3,5. Oft wird umgangssprachlich anstelle von EER auch von COP (coefficient of performance) gesprochen. Weiterhin muss die von der zentralen Kälteanlage erzeugte Kälte über relative weite Wege zu den verschiedensten Verbrauchern transportiert werden, wodurch hohe Kosten für den Verrohrungsaufwand (zum Beispiel für Leitungen, Isolation, Rohrtrassen) entstehen. Dies bedeutet auch einen erhöhten Wartungsaufwand (zum Beispiel für Ventile, Dichtungen) und es entstehen höhere Energieverluste.

Somit liegt der vorliegenden Erfindung die Aufgabe zugrunde, die Kälteversorgung und hierbei insbesondere die Bereitstellung von Eiswasser in Anlagen zur Getränkeherstellung, insbesondere Brauereien, im Vergleich zum Stand der Technik effizienter, kostengünstiger und CO₂-neutraler zu gestalten.

### Beschreibung der Erfindung

Die oben genannte Aufgabe wird durch Bereitstellen einer Anlage zur Getränkehersteltung, insbesondere Bierherstellung, gelöst, die eine erste Kühlvorrichtung zum Kühlen zumindest eines Mediums (beispielsweise eines Kälteträgers wie Glykol oder Verbrauchers wie beispielsweise eines Gärtanks) auf minimal eine erste Temperatur ausgebildet ist, und eine zweite Kühlvorrichtung, die (hinsichtlich ihrer Kühlfunktion) ausschließlich zum Erzeugen von Eiswasser durch Kühlen von Wasser auf minimal eine zweite Temperatur ausgebildet ist, umfasst. Die zweite Temperatur ist hierbei höher als die erste Temperatur (beispielsweise liegt die zweite Temperatur in einem Bereich von 3° C bis 10 °C und die erste minimale Temperatur in einem Bereich von -3 °C und -10 °C). Die zweite Kühlvorrichtung (Eiswasserkühlvorrichtung) ist separat von der ersten Kühlvorrichtung ausgebildet. Die erste Kühlvorrichtung kann (als eine zentrale Kühlvorrichtung ähnlich wie zentrale Kühlvorrichtungen des Stands der Technik) alle Kälteverbraucher direkt mit einem Kältemedium versorgen, gegebenenfalls jedoch (anders als im Stand der Technik vorgesehen) mit Ausnahme von Kälteverbrauchern, die Eiswasser benötigen. In der Anlage benötigtes Eiswasser wird immer unter Verwendung der erfindungsgemäß bereitgestellten separaten zweiten Kühlvorrichtung erzeugt (auch wenn ein Vorkühlen des Eiswassers direkt oder indirekt mithilfe von Kälte erfolgen kann, die von der ersten Kühlvorrichtung bereitgestellt wird; siehe auch Beschreibung unten).

Die zur Erzeugung des Eiswassers (mit minimal der zweiten oben genannten Temperatur) erfindungsgemäß vorgesehene zweite Kühlvorrichtung kann sehr genau für die Eiswassererzeugung aus Kaltwasser (etwa Frischwasser, Brauwasser oder Brauchwasser) das beispielsweise mit einer wohldefinierten Temperatur über die gesamte Betriebsdauer der Anlage zugeführt werden kann, und eben nur für diese Eiswassererzeugung konfektioniert werden. Somit kann ein hoher Nutzungsgrad (ESEER = European Seasonal Energy Efficiency Ratio) dieser speziell für die Eiswassererzeugung vorgesehenen zweiten Kühlvorrichtung erreicht werden, beispielsweise ein EER von größer als 6 oder 7. Weiterhin kann diese zweite Kühlvorrichtung in räumlicher Nähe eines Eiswasserverbrauchers oder eines Tanks, in dem Eiswasser vorgehalten wird (s. auch Beschreibung unten), angeordnet sein, sodass der Verrohrungsaufwand und die damit verbundenen Energieverluste beim Transport von Eiswasser durch Rohrleitungen relativ gering gehalten werden können. Auch können durch eine räumlich nahe Anordnung der zweiten Kühlvorrichtung bei einem Eiswasserverbraucher oder einem Tank, in dem Eiswasser vorgehalten wird, die Mengen gegebenenfalls benötigten Kältemittel (wie etwa NH₃) oder Kälteträgers (wie etwa Glykol) gering gehalten werden, was wiederum die Kosten für Anschaffung, Wartung und Sicherheit reduziert.

Die erste Kühlvorrichtung kann eine Kälteanlage, insbesondere eine Kompressionskälteanlage oder Absorptionskälteanlage, sein oder umfassen. Die zweite Kühlvorrichtung kann eine Kälteanlage, insbesondere eine Kompressionskälteanlage oder Absorptionskälteanlage, oder eine Wärmepumpe sein oder umfassen. Die erste sowie die zweite Kühlvorrichtung können zur direkten Kühlung, also ohne einen Zwischenkreislauf für ein Kälteträgermedium, oder zur indirekten Kühlung mithilfe eines Zwischenkreislaufs für ein Kälteträgermedium ausgebildet sein.

Gemäß einer Weiterbildung umfasst die Anlage einen Eiswassertank zum Speichern von dem in der zweiten Kühlvorrichtung erzeugten Eiswasser, wobei die zweite Kühlvorrichtung zumindest teilweise (namentlich der kälteerzeugende Teil) in einer Entfernung von maximal 10 bis 50 m von dem Eiswassertank angeordnet ist.

Weiterhin kann die Anlage einen Kaltwassertank zum Speichern von Kaltwasser (beispielsweise mit Temperaturen zwischen 10 °C und 20 °C oder 30 °C oder maximal 40 °C) umfassen, wobei der Kaltwassertank mit der zweiten Kühlvorrichtung so verbunden ist, dass Abwärme und dissipierte Antriebsenergie der zweiten Kühlvorrichtung dem in dem Kaltwassertank gespeicherten Kaltwasser zum Beispiel über einen Wärmetauscher (Kondensator) zugeführt wird. Die zum Erzeugen des Eiswassers aufgewendete Energie geht also zumindest nicht vollständig verloren, sondern wird zum größten Teil in einem (typischerweise oberen) Teilbereich des Kaltwassertanks zwischengespeichert und im System weiter verwendet. Weiterhin kann der Kaltwassertank zum Liefern von auf Eiswassertemperatur zu kühlenden Wassers mit der zweiten Kühlvorrichtung verbunden sein.

Der Kaltwassertank und der Eiswassertank können zwei separate Tanks sein, oder sie können ein und derselbe Tank (namentlich ein kombinierter Eiswasser- und Kaltwassertank) sein. In diesem Tank wird unten das kälteste Wasser (Eiswasser) gelagert und darüber in mehreren Teilbereichen sukzessive wärmeres (Kalt)Wasser. Die oben genannte Abwärme und dissipierte Antriebsenergie der zweiten Kühlvorrichtung kann einem oberen Teilbereich des kombinierten Eiswasser- und Kaltwassertanks (beispielsweise dem obersten Teilbereich) zugeführt werden. Der Platzbedarf, der apparative Aufwand und Wartungsaufwand und somit die Kosten für die Bereitstellung von Kaltwasser und Eiswasser können mithilfe eines kombinierten Eiswasser- und Kaltwassertanks im Vergleich zu zwei separaten Tanks für das Speichern von Kaltwasser beziehungsweise Eiswasser verringert werden.

Es kann auch vorgesehen sein, dass die zweite Kühlvorrichtung einen Kälteträger oder ein Kältemittel an einen in einem (unteren) Teilbereich des Eiswassertanks oder des kombinierten Eiswasser- und Kaltwassertanks angeordneten Wärmetauscher (der als Teil der zweiten Kühlvorrichtung angesehen werden kann) liefert, sodass zumindest ein Teil des Eiswassers zumindest teilweise innerhalb des Eiswassertanks oder des kombinierten Eiswasser- und Kaltwassertanks erzeugt wird.

Umwelttechnisch kann es bevorzugt sein, eine regenerative Energieerzeugungsanlage zur elektrischen Antriebs-Energieversorgung von zumindest der zweiten Kühlvorrichtung bereitzustellen, die insbesondere eine Photovoltaik-Anlage und/oder einer Windkraftanlage und/oder ein Blockheizkraftwerk umfassen kann.

Ebenfalls umwelttechnisch und energetisch kann es vorteilhaft sein, die Anlage mit einer rekuperativen Kühleinrichtung, die insbesondere einen Wärmetauscher umfasst, auszustatten, wobei diese rekuperative Kühleinrichtung zum rekuperativen (Vor)Kühlen von Wasser ausgebildet ist, das nachfolgend von der zweiten Kühlvorrichtung auf Eiswassertemperatur weiter abgekühlt wird.

Die erfindungsgemäße Anlage kann eine Brauerei sein. In Brauereien ist das Problem des Energieverbrauchs von Kühlprozessen von besonderer Wichtigkeit und somit kann sich für eine Brauerei eine Energieersparnis durch Vorsehen der speziell für die Eiswassererzeugung ausgelegten zweiten Kühlvorrichtung als besonders vorteilhaft erweisen.

In einer Brauerei wird Bier mit relativ niedriger Temperatur in Gär- und/oder Lagertanks gelagert (zum Beispiel in einem Bereich von 3 °C und -2 °C) und schließlich bei einer relativ niedrigen Temperatur (die unterhalb der Lagertemperatur liegen kann) filtriert. Einige Brauereien kühlen das Bier vor der Filtration nochmals zusätzlich ab (zum Beispiel in einem Bereich von -1°C und -3°C), um durch Ausfällung von kältetrüben Stoffen die kolloidale Stabilität des Bieres zu erhöhen. Die relativ niedrigen Temperaturen können mithilfe der ersten Kühlvorrichtung erreicht werden. Mithilfe des gelagerten und/oder gefilterten Bieres relativ niedriger Temperatur kann Wasser, das mithilfe der zweiten Kühlvorrichtung auf Eiswassertemperatur zu kühlen ist, zur weiteren Energieersparnis vorgekühlt werden. Somit umfasst gemäß einer Weiterbildung die Anlage als Brauerei weiterhin einen Gär- und/oder Lagertank zum Lagern von Bier und optional eine Filtrationseinrichtung zur Filtration von zuvor in dem Gär- und/oder Lagertank gelagerten Bier, und weiterhin eine erste Fördereinrichtung zum Fördern von Bier bei Lagertemperatur aus dem Gär- und/oder Lagertank und/oder Bier bei Filtrationstemperatur aus der Filtrationseinrichtung als Kälteträger zu der oben genannten rekuperativen Kühleinrichtung. Die erste Fördereinrichtung kann, wie auch die im Folgenden genannten zweite, dritte und vierte Fördereinrichtungen, eine Leitung oder eine Leitung und eine Pumpe umfassen. Anstelle einer Pumpe können die Medien auch lediglich über ein Druckgefälle gefördert werden.

Die Anlage als Brauerei kann gemäß einer weiteren Weiterbildung umfassen:
einen Wärmeverbraucher, insbesondere ein Maischgefäß oder einen Läuterwürzeerhitzer;
einen Warmwasserverbraucher (Warmwassernutzer), insbesondere ein Maischgefäß oder eine Abläutervorrichtung wie beispielsweise ein Läuterbottich oder Maischefilter;
einen Würzekühler;
eine zweite Fördereinrichtung zum Fördern von von der zweiten Kühlvorrichtung erzeugtem Eiswasser (beispielsweise zum Fördern des von der zweiten Kühlvorrichtung erzeugten und in einem Eiswassertank beziehungsweise kombinierten Eiswasser- und Kaltwassertank zwischengespeicherten Eiswassers) zu dem Würzekühler zum Kühlen von Würze; und
eine dritte Fördereinrichtung zum Fördern des in dem Würzekühler erwärmten Eiswassers zu dem Wärmeverbraucher (oder einem optionalen Wärmespeicher) oder zu dem Warmwasserverbraucher (oder zu einem optionalen Warmwassertank).

Alternativ zum Würzekühler oder zusätzlich dazu kann ein Maischekühler zum Kühlen von Maische vorgesehen sein.

Somit kann nicht nur die Abwärme und dissipierte Antriebsenergie der zweiten Kühlvorrichtung, sondern auch die bei der Würzekühlung (Maischekühlung) anfallende Wärme weiterverwendet werden. Das in dem Kaltwassertank beziehungsweise kombinierten Eiswasser- und Kaltwassertank durch die Abwärme und dissipierte Antriebsenergie der zweiten Kühlvorrichtung erwärmte Kaltwasser kann durch eine vierte Fördereinrichtung zu dem Warmwasserverbraucher gefördert werden, wodurch man weniger Warmwasser benötigt, um die gewünschte Temperatur z.B. beim Einmaischen und Anschwänzen zu erreichen.

Das oben genannte in einem Kaltwassertank beziehungsweise kombinierten Eiswasser- und Kaltwassertank gespeicherte Kaltwasser beziehungsweise das erwärmte Kaltwasser kann einer ersten Vorrichtung (beispielsweise zum Verbrauch in der Vorrichtung oder zur Kühlung eines von ihr bearbeiteten/gelieferten Mediums) zugeführt werden, wobei die erste Vorrichtung einen Wärmetauscher umfassen kann und insbesondere ein Würzevorkühler, Maischekühler, Wassermischer, eine Schrotmühle, Einmaischvorrichtung, ein Maischgefäß, Maischefilter, Läuterbottich, eine Würzepfanne, Einrichtung zum Entgasen von Wasser, eine Flaschenreinigungsmaschine oder eine Reinigungsanlage sein kann.

Prinzipiell kann die erste Vorrichtung jeglicher Kaltwasserverbraucher mit Verbindung zum Tank einer Brauerei oder einer Anlage zur Getränkeherstellung und/oder Getränkeabfüllung sein.

Das oben genannte in einem Eiswassertank beziehungsweise kombinierten Eiswasser- und Kaltwassertank gespeicherte Eiswasser kann beispielsweise zur Würzekühlung oder Maischekühlung in einer Brauerei verwendet werden. Beispielsweise kann in einem unteren Teilbereich (Eiswasserbereich) des kombinierten Eiswasser- und Kaltwassertanks ein Volumen an Eiswasser vorgehalten werden, das zur Würzekühlung mindestens (beispielsweise genau) eines Suds oder von mindestens (beispielsweise genau oder auch maximal) eineinhalb, zwei oder drei Suden ausreicht. Gemäß einer Alternative kann zu Beginn der Würzekühlung von mindestens einem oder mindestens eineinhalb Suden (beziehungsweise maximal eineinhalb Suden oder maximal drei Suden) nur ein Teil des zur Kühlung von dem mindestens einen oder mindestens eineinhalb Suden benötigten Volumens an Eiswasser im Eiswasser- und Kaltwassertank vorliegen und der restliche benötigte Teil im Verlauf der Würzekühlung erzeugt werden. So wird es beispielsweise ermöglicht, die zweite Kühlvorrichtung mit gleichmäßiger Last zu betreiben. Gemäß einer anderen Alternative liegt zu Beginn der Würzekühlung bereits das gesamte für den Sud oder die Sude benötige Volumen an Eiswasser vor.

Vor der Kühlung der Würze oder Maische durch das Eiswasser kann die Würze (in einer ersten Stufe eines Würzekühlers) oder Maische mithilfe eines anderen Kälteträgers vorgekühlt werden, wobei dieser Kälteträger nach dem Erhitzen durch die Würzekühlung oder Maischekühlung, gegebenenfalls nach Zwischenspeicherung in einem Energiespeichertank, dem oben genannten Wärmeverbraucher oder Warmwasserverbraucher zugeführt werden kann (siehe auch die detaillierte Beschreibung unten).

Weiterhin kann eine Steuerungs-/Regeleinrichtung das Kaltwasservolumen und Eiswasservolumen im Kaltwassertank und Eiswassertank beziehungsweise im kombinierten Eiswasser- und Kaltwassertank steuern/regeln/überwachen, insbesondere um die zur Erzeugung des Eiswassers verwendete zweite Kühlvorrichtung, die nur so viel Volumen kühlen muss, wie benötigt wird, entsprechend zu steuern/regeln. Allgemein kann eine Steuerungs-/Regeleinrichtung vorgesehen sein, die den Betrieb der ersten und zweiten Kühlvorrichtung steuert/regelt.

Während in den oben beschriebenen Ausführungsformen die zweite Kühlvorrichtung ausschließlich zum Kühlen von Wasser auf minimal eine zweite Temperatur ausgebildet ist, die höher als die erste Temperatur ist, kann alternativ die zweite Kühlvorrichtung ausschließlich zum Kühlen eines Mediums auf minimal eine zweite Temperatur ausgebildet sein, die niedriger als die erste Temperatur ist. Auch in diesem Fall kann die zweite Kühlvorrichtung unabhängig von der ersten Kühlvorrichtung optimal konfiguriert werden, sodass ein hoher Nutzungsgrad erreicht werden kann. Es wird also weiterhin eine Anlage zur Getränkeherstellung, insbesondere Bierherstellung, mit einer ersten Kühlvorrichtung, die zum Kühlen zumindest eines ersten Mediums auf minimal eine erste Temperatur ausgebildet ist, und einer zweiten Kühlvorrichtung, die ausschließlich zum Kühlen eines zweiten Mediums auf minimal eine zweite Temperatur ausgebildet ist, die unterhalb der ersten Temperatur liegt, und die separat von der ersten Kühlvorrichtung ausgebildet ist, bereitgestellt. In dieser Ausführungsform kann die erste Kühlvorrichtung zum Erzeugen von Eiswasser vorgesehen sein, und es kann die zweite Kühlvorrichtung dafür vorgesehen sein, einen Verbraucher der Anlage mit Kälte zu versorgen, der innerhalb der Anlage mit der größten Kälte, also mit Medium mit der niedrigsten Temperatur, zu versorgen ist. Die oben beschriebenen Merkmalskombinationen können gemäß weiterer Ausführungsformen wo geeignet auch für diese Anlage realisiert werden.

Weiterhin wird ein Verfahren zur Bereitstellung von Eiswasser zur Getränkeherstellung, insbesondere Bierherstellung, bereitgestellt, das die Schritte des Zuführens von Kaltwasser mit einer Kaltwassertemperatur zu einer ausschließlich zur Eiswassererzeugung bereitgestellten Kühlvorrichtung und Kühlens des zugeführten Kaltwassers durch die ausschließlich zu einer Eiswassererzeugung bereitgestellten Kühlvorrichtung auf eine Eiswassertemperatur, die unterhalb der Kaltwassertemperatur liegt, um Eiswasser zu erzeugen, umfasst. Dieses Verfahren kann mithilfe sämtlicher oben beschriebener Beispiele der erfindungsgemäßen Anlage wie auch den im Folgenden beschriebenen Ausführungsformen der der erfindungsgemäßen Anlage ausgeführt werden.

Im Folgenden werden Ausführungsformen einer erfindungsgemäßen Vorrichtung und beispielhafte Betriebsvorgänge derselben unter Bezugnahme auf die Figuren beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht einen Teil einer Brauerei gemäß einer Ausführungsform der vorliegenden Erfindung.
Figur 2 veranschaulicht einen Teil einer Brauerei gemäß einer Ausführungsform der vorliegenden Erfindung.

Erfindungsgemäß wird eine Anlage zur Getränkeherstellung, beispielsweise eine Brauerei, bereitgestellt, die eine (zentrale) erste Kühlvorrichtung zum Versorgen von Kälteverbrauchern der Anlage und eine zweite Kühlvorrichtung (hinsichtlich ihrer Kühlfunktion) ausschließlich zum Erzeugen von Eiswasser umfasst. Die Erzeugung relativ großer Volumina relativ kalten Eiswassers erfordert relativ große Energiemengen. Erfindungsgemäß wird eine speziell für die Erzeugung des Eiswassers konfektionierte (zweite) Kühlvorrichtung separat von der (zentralen) ersten Kühlvorrichtung bereitgestellt. Auch wenn die zweite Kühlvorrichtung ausschließlich zum Erzeugen von Eiswasser dient, schließt das nicht aus, dass auch Kälte, die von der ersten Kühlvorrichtung bereitgestellt wird, direkt oder indirekt zum Vorkühlen des von der zweiten Kühlvorrichtung auf Eiswassertemperatur gekühlten Wassers Verwendung findet.

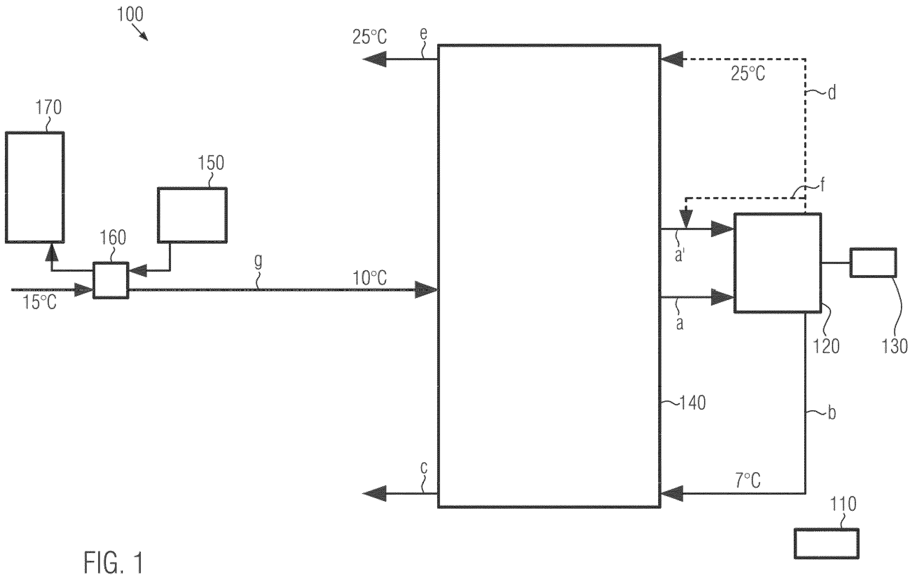

Eine Ausführungsform einer Anlage 100 zur Getränkeherstellung, beispielsweise einer Brauerei, ist in Figur 1 veranschaulicht. Die Anlage 100 umfasst eine erste Kühlvorrichtung 110, die als zentrale Kühlvorrichtung Verbraucher der Anlage 100 mit Kälte versorgt. Ein Kälteträger, wie etwa Glykol, kann in der ersten Kühlvorrichtung 110 gekühlt werden und beispielsweise Wärmetauschern zugeführt werden, in denen Kälte abgegeben wird. Typische Verbraucher sind Gär-, Lager-, Hefe- und Drucktanks, CO₂-Rückgewinnungsanlagen, Blendingwasserkühler, Jungbierkühler, Biertiefkühler, Kurzzeiterhitzungsanlagen, Raumkühlungsanlagen, etc. Die erste Kühlvorrichtung 110 ist dazu ausgebildet, ein Medium bis auf minimal eine erste Temperatur zu kühlen.

Die erste Kühlvorrichtung 110 kann eine Kälteanlage, beispielsweise eine Kompressionskälteanlage sein, bei der ein Kältemittel im Kreis geleitet wird, das abwechselnd Wärme bei niedriger Temperatur aufnimmt und bei höherer Temperatur wieder abgibt. Dabei findet ein abwechselndes Verdampfen und Kondensieren des Kältemittels in einem entsprechenden Verdampfer beziehungsweise Kondensator statt.

In dem Kreislauf der Kälteanlage wird gasförmiges Kältemittel von einem Verdichter (in der Praxis häufig Kolbenkompressoren) verdichtet, wobei elektrische Energie eingesetzt wird. In dem nachgeschalteten Wärmeübertrager, d.h. Kondensator, Kühlturm oder dergleichen, kondensiert das Kältemittel, wobei es Wärme bei hoher Temperatur abgibt, entsprechend der bei dem hohen Druck ebenfalls hohen Kondensationstemperatur. Das flüssige Kältemittel kann dann zu einer Drosseleinrichtung, insbesondere in Form eines Expansionsventils, geleitet werden, wo sein Druck reduziert wird. In einem weiteren Wärmeübertrager, d.h. Verdampfer, nimmt das Kältemittel anschließend durch Verdampfen Wärme bei niedriger Temperatur auf, wodurch entweder das zu kühlende Objekt bzw. der zu kühlende Raum direkt gekühlt wird (man spricht dann von einer direkten Kühlung) oder ein zwischengeschalteter Kälteträger, wie etwa Glykol, gekühlt wird (man spricht dann von einer indirekten Kühlung). Der Verdichter saugt das verdampfte Kältemittel wieder an und der Kreisprozess ist geschlossen.

Bei der indirekten Kühlung ist ein Zwischenkreislauf für ein Kälteträgermedium (beispielsweise Glykol) vorgesehen, der das zu kühlende Objekt beziehungsweise den zu kühlenden Raum mit dem Verdampfer verbindet. In der Weise, wie der Kälteträger durch das zu kühlende Objekt beziehungsweise den zu kühlenden Raum erwärmt wird, muss er im Verdampfer wieder abgekühlt werden. Dies geschieht durch Wärmeübertrag im Verdampfer von dem Kälteträger (beispielsweise Glykol) auf das Kältemittel (beispielsweise NH₃).

Da bei der indirekten Kühlung ein Zwischenkreislauf und somit im Gegensatz zur direkten Kühlung ein zusätzlicher Wärmetauscher vorhanden ist, ist aus energetischer Sicht die direkte Kühlung zu bevorzugen, denn es muss berücksichtigt werden, dass jeder Wärmetauscher einen Temperatursprung und somit einen reduzierten Nutzungsgrad hervorruft. Beispielsweise bei der Annahme, dass die Temperaturdifferenz am Wärmetauscher von dem Medium, welches die thermische Energie aufnimmt zu dem Medium, welches die thermische Energie abgibt, 4 °C beträgt und ein Kälteverbraucher auf 6 °C gekühlt werden soll, muss das Kälteträgermedium eine Temperatur von 2 °C aufweisen und das Kältemittel muss eine Temperatur von -2°C aufweisen. Ohne Zwischenkreislauf müsste das Kältemittel lediglich eine Temperatur von 2 °C aufweisen. Zudem bedeutet jedes Grad Celsius, auf welches die Kälteanlage herunter kühlen muss, einen höheren Bedarf an elektrischer Energie.

Die Kälteanlage kann alternativ als Absorptionskälteanlage ausgebildet sein, wobei an die Stelle des Verdichters ein Absorber, ein Temperaturwechsler und ein Kocher treten.

Das im Wärmeübertrager bzw. Verdampfer verdampfte Kältemittel wird hierbei im Absorber in einer Flüssigkeit, im Allgemeinen Wasser, gelöst, wobei die entstehende Lösungswärme über einen separaten Kühlkreislauf abgeführt wird. Die mit Kältemittel angereicherte Flüssigkeit wird über den Temperaturwechsler dem Kocher zugeführt, wo das gelöste Kältemittel durch Erhitzen wieder ausgetrieben wird. Das ausgetriebene Kältemittel wird anschließend im Kondensator wieder verflüssigt. Dabei erhitzt die vom Kocher an den Absorber zurückfließende, vom Kältemittel abgereicherte Flüssigkeit über den Temperaturwechsler die im Zulauf zum Kocher befindliche, mit Kältemittel angereicherte Flüssigkeit.

Weiterhin umfasst die Anlage 100 eine zweite Kühlvorrichtung 120, deren Kältestrom ausschließlich zum Erzeugen von Eiswasser genutzt wird. Die zweite Kühlvorrichtung 120 kann eine Kälteanlage, beispielsweise eine wie oben beschriebene Kompressionskälteanlage oder Absorptionskälteanlage sein. Alternativ kann die zweite Kühlvorrichtung 120 als Wärmepumpe ausgebildet sein oder eine Wärmepumpe umfassen. Mit elektrischer Energie wird die zweite Kühlvorrichtung 120 durch eine Energieerzeugungsanlage 130 versorgt. Insbesondere kann die Energieerzeugungsanlage für elektrische Antriebsenergie 130 eine regenerative Energieerzeugungsanlage, etwa eine Photovoltaik-Anlage und/oder einer Windkraftanlage und/oder ein Blockheizkraftwerk sein oder umfassen.

Die zweite Kühlvorrichtung 120 kann Kaltwasser auf minimal eine zweite Temperatur abkühlen, die von der oben genannten ersten Temperatur, die von der ersten Kühlvorrichtung 110 erreicht werden kann, verschieden ist. Beispielsweise ist die zweite Temperatur höher als die erste Temperatur, d.h. die zweite Kühlvorrichtung 120 kühlt minimal auf eine Temperatur, die höher liegt als eine durch die erste Kühlvorrichtung 110 minimal erreichbare Temperatur. Beispielsweise kann die zweite Kühlvorrichtung 120 Kaltwasser mit einer Temperatur zwischen 10 °C bis 30 °C auf eine Eiswassertemperatur zwischen 3 °C und 10 °C kühlen. Die erste Temperatur kann hingegen in einem Bereich von -4 °C und -10 °C liegen.

Bei dem Kaltwasser kann es sich um Frischwasser oder Brauwasser oder Brauchwasser handeln. Frischwasser ist Wasser, welches zum Beispiel aus einer (eigenen) Quelle, einem (eigenen) Brunnen oder Oberflächengewässer (beispielsweise See oder Fluss) stammt; es kann auch von einem Wasserversorger stammen. Das Frischwasser kann unbehandelt zum Beispiel direkt von einer Quelle oder Brunnen stammen oder es kann mittels Wasseraufbereitung aufbereitet werden (biologisch durch Abtötung von Keimen z. B. durch UV-Strahlen und/oder chemisch/technisch beispielsweise zur Reduzierung der Karbonathärte durch eine Kalkfällungsanlage). Das Wasser wird dann als Brauwasser (zur Herstellung von Bier oder anderen Getränken, sprich Wasser welches in das Produkt eingeht) oder Brauchwasser (Wasser zum Beispiel zum Spülen oder Reinigen von Behälter und Leitungen zur Bier- oder Getränkeherstellung beziehungsweise Getränkeabfüllung, sprich Wasser, welches nicht in das Produkt eingeht, jedoch jegliches Wasser ist, welches in der Brauerei- oder Getränkeherstellung beziehungsweise Getränkeabfültung verwendet wird, also zum Beispiel auch Wasser, welches als Wärmeträgermedium in einem Energiespeichertank eingesetzt wird) verwendet. Bei Brauwasser kann es sich prinzipiell auch um Brauchwasser handeln (d.h. Brauwasser kann beispielsweise auch für die Reinigung beispielsweise für Behälter oder Leitungen verwendet werden, beziehungsweise, wenn Brauchwasser die erforderliche Wasserqualität aufweist, kann Brauchwasser auch als Brauwasser, also zur Herstellung von Bier oder Getränken verwendet werden); denkbar ist auch, dass das Wasser erst nach dem Eiswasser- und/oder Kaltwassertank aufbereitet oder zusätzlich nochmals aufbereitet wird. Möglich ist auch, dass das Abwasser in einer Brauerei und/oder in einem Getränkeherstellungsbetrieb so aufbereitet wird, dass es wieder als Frischwasser eingespeist werden kann.

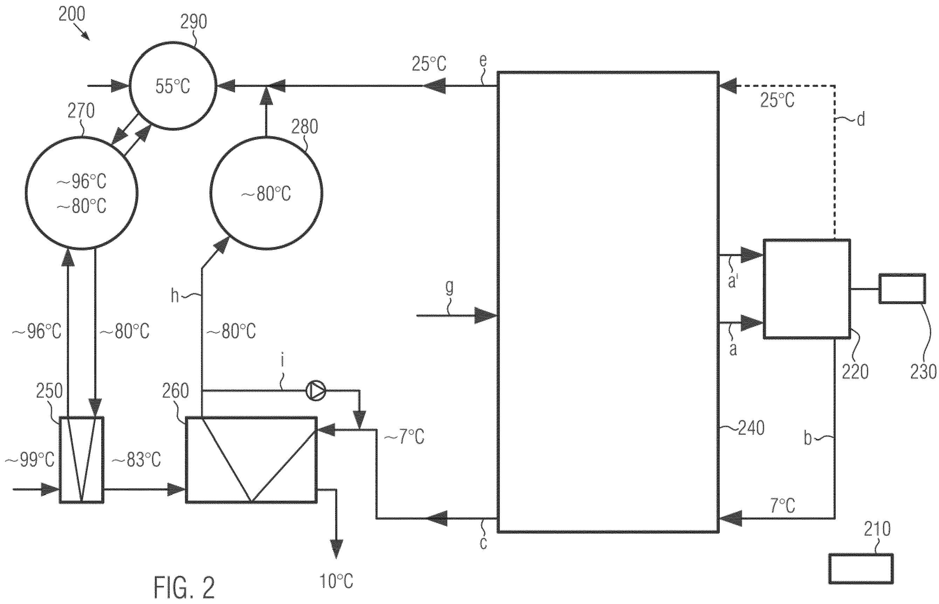

Das von der zweiten Kühlvorrichtung 120 auf Eiswassertemperatur gekühlte Kaltwasser kann aus einem Kaltwassertank an die zweite Kühlvorrichtung 120 gefördert werden, und das von der zweiten Kühlvorrichtung 120 erzeugte Eiswasser kann in einem Eiswassertank bis zu seiner Nutzung durch einen Eiswasserverbraucher zwischengespeichert werden. Allgemein werden in der in Figur 1 gezeigten Anlage 100 (wie auch in der in Figur 2 gezeigten Anlage 200, siehe Beschreibung unten) Medien über Fördereinrichtungen gefördert, die Leitungen oder Leitung und Pumpen umfassen. Pumpen sind einfachheitshalber nur zum Teil in den Figuren gezeigt. Anstelle durch Pumpen kann beispielhaft auch über ein Druckgefälle Medien gefördert werden.

In dem in Figur 1 gezeigten Beispiel sind der Kaltwassertank und der Eiswassertank als ein und derselbe kombinierte Eiswasser- und Kaltwassertank 140 ausgebildet. Die zweite Kühlvorrichtung 120 kann über unterschiedliche Leitungen a, a' Kaltwasser unterschiedlicher Temperaturniveaus aus dem kombinierten Eiswasser- und Kaltwassertank 140 zur Kühlung erhalten. Vorteilhafterweise befindet sich die zweite Kühlvorrichtung 120 in einem möglichst geringen Abstand, beispielsweise in einem Abstand von 10 bis 50 Meter, zu dem kombinierten Eiswasser- und Kaltwassertank 140, um den Verrohrungsaufwand und somit den Energieverlust über Rohrleitungen beim Transport möglichst gering zu halten. Alternativ zum kombinierten Eiswasser- und Kaltwassertank 140 kann auch ein separater Eiswassertank und separater Kaltwassertank vorhanden sein. Je nach zu bevorrateten Volumina von Eiswasser und Kaltwasser können auch mehrere kombinierte Eiswasser- und Kaltwassertanks 140 oder mehrere Eiswassertanks und Kaltwassertanks vorhanden sein. Wenn mehrere Tanks vorhanden sind, so ist bevorzugt dennoch lediglich eine zweite Kühlvorrichtung für diese Tanks vorhanden.

Das von der zweiten Kühlvorrichtung 120 auf Eiswassertemperatur (beispielsweise die oben genannte zweite Temperatur) gekühlte Wasser wird als Eiswasser über die Leitung b in einen unteren Teilbereich des Eiswasser- und Kaltwassertanks 140 eingeleitet und kann bei Bedarf über die Leitung c des Eiswasser- und Kaltwassertanks 140 ausgeleitet und einem Eiswasserverbraucher, wie beispielsweise einem Würzekühler oder Maischekühler zugeleitet werden. Die zweite Kühlvorrichtung 120 kann auch zusätzlich Eiswasser mit einer höheren Temperatur (insbesondere höher als die zweite Temperatur) erzeugen und über eine weitere (nicht in Figur 1 gezeigte) Leitung einem im Eiswasser- und Kaltwassertank 140 höher liegenden Eiswasserbereich zugeführt werden. Dieses kann insbesondere vorteilhaft sein, wenn nach einem mit niedrigerer Eiswassertemperatur erfolgten Prozess (beispielsweise Sudvorgang für eine Biersorte, wie etwa einem untergärigen Pils-Bier) ein mit höherer Eiswassertemperatur auszuführender Prozess (beispielsweise Sudvorgang für eine andere Biersorte, wie etwa einem obergärigen Weizen-Bier) ansteht.

Die Abwärme und dissipierte Antriebsenergie der zweiten Kühlvorrichtung 120 geht nicht verloren. Vielmehr wird sie über die Leitung d einem oberen Bereich des Eiswasser- und Kaltwassertanks 140 zur Erwärmung des in dem Eiswasser- und Kaltwassertank 140 gespeicherten Kaltwassers in diesem Bereich zugeführt. Das derart in dem Eiswasser- und Kaltwassertank 140 vorgewärmte Kaltwasser wird dann bei Bedarf über die Leitung e aus dem Eiswasser- und Kaltwassertank 140 abgezogen und Verbrauchern wie beispielsweise einem Maischgefäß als Einmaischwasser zugeführt, wodurch weniger Warmwasser für die Soll-Mischtemperatur benötigt wird.

Für eine erhöhte Flexibilität kann vorgesehen sein, einen Teil der Abwärme und dissipierten Antriebsenergie der zweiten Kühlvorrichtung 120 über eine Leitung f zum Vorwärmen eines Teils des durch die zweite Kühlvorrichtung 120 zu kühlenden Kaltwassers zu verwenden. Dieses kann beispielsweise vorteilhaft sein, wenn nach einem Betriebsablauf, innerhalb dessen eine erste Eiswassertemperatur bereitgestellt wird, ein Betriebsablauf folgt, innerhalb dessen eine zweite Eiswassertemperatur bereitzustellen ist, die oberhalb der ersten Eiswassertemperatur liegt.

Während in der in Figur 1 gezeigten Ausführungsform die Kühlung von Kaltwasser auf Eiswassertemperatur außerhalb des kombinierten Eiswasser- und Kaltwassertanks 140 erfolgt, kann alternativ oder zusätzlich eine solche Kühlung über einen entsprechend in dem kombinierten Eiswasser- und Kaltwassertank 140 vorgesehen Wärmetauscher und/oder eine in dem kombinierten Eiswasser- und Kaltwassertank 140 vorgesehen Leitung und/oder einen als Kühlfläche ausgebildeten Teil der Zarge und/oder des Bodens des kombinierten Eiswasser- und Kaltwassertanks 140 erfolgen, die durch die zweite Kühlvorrichtung 120 mit einem Kälteträger oder Kältemittel beliefert werden.

Das in dem Eiswasser- und Kaltwassertank 140 bereitgestellte Kaltwasser und Eiswasser kann zur Getränkeherstellung/-abfüllung wie etwa zur Bierherstellung beziehungsweise der Reinigung von Anlagen zur Getränkeherstellung/-abfüllung, etwa von benutzten Behältern oder Leitungen, und zu Kühlzwecken Verwendung finden. So wird bei Bedarf Kaltwasser aus dem Kaltwasserbereich des Eiswasser- und Kaltwassertank 140 vorwiegend zur Herstellung (beispielhaft bei der Bierherstellung als Einmaischwasser oder Anschwänzwasser) und/oder Abfüllung (beispielhaft Wasser für eine Flaschenreinigungsmaschine) von Getränken oder zur Reinigung dieser Anlagen (beispielhaft Wasser für die Reinigung von Behälter mittels einer CIP-Anlage) ausgelassen. Kaltwasser kann jedoch auch für Kühlzwecke (beispielhaft zur Kühlung von Maische für einen Maischekühler) ausgelassen werden. Wenn sich das durch das Abkühlen des Mediums erwärmte Kaltwasser nicht zu stark erwärmt, kann es auch wieder in den Eiswasser- und Kaltwassertank 140 zurückgeführt werden.

Das Eiswasser findet zunächst zu Kühlzwecken, etwa zur Würzekühlung in einer Brauerei, Verwendung. Auch wenn das Eiswasser für Kühlzwecke verwendet wird, so kann es nach dem Kühlprozess, in dem es erwärmt wird, auch zur Getränkeherstellung wie etwa zur Bierherstellung beziehungsweise der Reinigung von Behälter oder Leitungen verwendet werden. Nach dem Erwärmen kann das Wasser einem Warmwassertank zugeführt werden. In dem unteren Eiswasserbereich des Eiswasser- und Kaltwassertank 140 kann beispielsweise ein Volumen an Eiswasser vorgehalten werden, das zur Würzekühlung beispielsweise mindestens eines Suds oder von mindestens eineinhalb Suden oder maximal eineinhalb bis drei Suden ausreicht. Hierbei kann bereits das gesamte benötigte Eiswasservolumen zu Beginn der Würzekühlung im Eiswasser- und Kaltwassertank 140 vorliegen, oder es kann ein Teil davon zu Beginn der Würzekühlung vorliegen und ein weiterer benötigter Teil im Verlauf der Würzekühlung bereitgestellt werden.

Die Temperatur des Kaltwassers sowie des Eiswassers im Eiswasser- und Kaltwassertank 140 oder bei Zuführen beziehungsweise nach Verlassen des Eiswasser- und Kaltwassertank 140 kann durch eine geeignete Temperaturmesseinrichtung gemessen werden. Im unteren Bereich des Eiswasser- und Kaltwassertanks 140, beispielsweise in der Nähe des Bodens oder am Boden, kann eine Druck- und/oder Flüssigkeitsniveau-Messeinrichtung vorgesehen sein. Eine Flüssigkeitsniveau-Messeinrichtung kann sich zusätzlich oder alternativ auch in der Zarge des Eiswasser- und Kaltwassertank 140 befinden. Wenn die Füllmenge des in dem Eiswasser- und Kaltwassertank 140 gespeicherten Kaltwassers und Eiswassers nach Ausleiten des Kaltwassers und/oder Eiswassers unter ein unteres Niveau fällt, kann ein geregeltes Einleiten von Kaltwasser veranlasst werden, beispielsweise bis das Kaltwasser ein oberes Niveau des Füllstands erreicht.

Gespeist wird der Eiswasser- und Kaltwassertank 140 mit Kaltwasser über eine Leitung g. Optional erfolgt die Einspeisung des Kaltwassers nicht direkt aus einer Kaltwasserquelle, sondern Kaltwasser aus einer Kaltwasserquelle wird vor dem Einleiten in den Eiswasser- und Kaltwassertank 140 rekuperativ gekühlt. In einer Brauerei beispielsweise erfolgt am Ende des Lager-/Gärprozesses meist eine Bierfiltration statt. Die Bierfiltration erfolgt bei sehr niedrigen Temperaturen etwa um 0 °C in einer Bierfiltrationseinrichtung 150, oft wird das Bier vor der Bierfiltration mit einem Tiefkühler sogar nochmals gekühlt, sodass die Filtration bei möglichst tiefen Temperaturen stattfinden kann. Vor der Abfültung beziehungsweise vor der Förderung zu Drucktanks 170 kann eine Erwärmung des filtrierten Biers mithilfe einer Wärmetauschers 160 erfolgen. Als Wärmemittel kann in dem Wärmetauscher 160 Kaltwasser aus einer Kaltwasserquelle dienen, das in dem Wärmetauscher 160 abgekühlt und dann in den Eiswasser- und Kaltwassertank 140 über die Leitung g eingeleitet wird. Statt nach der Bierfiltration kann auch aus dem Lager-/Gärtank stammendes Bier vor der Bierfiltration rekuperativ das in den Eiswasser- und Kaltwassertank 140 einzuleitende Kaltwasser kühlen.

Eine Anlage zur Getränkeherstellung gemäß einer Ausführungsform in Form einer Brauerei 200 wird in Figur 2 veranschaulicht. Die Brauerei 200 kann die in Figur 1 gezeigte Anlage umfassen. Sämtliche Spezifikationen der mit Bezug auf die in Figur 1 beschriebenen Komponenten können auf die entsprechenden in Figur 2 gezeigten Komponenten zutreffen.

Die in Figur 2 gezeigte Brauerei umfasst eine erste Kühlvorrichtung 210, die als zentrale Kühlvorrichtung Verbraucher der Brauerei 200 mit Kälte versorgt und dazu ausgebildet ist, ein Medium bis minimal auf eine erste Temperatur zu kühlen. Die Brauerei 200 umfasst eine zweite Kühlvorrichtung 220, die dazu ausgebildet ist, Wasser bis minimal auf eine zweite Temperatur zu kühlen, die höher liegen kann als die erste Temperatur, um Eiswasser zu erzeugen, mithilfe dessen eine Würzekühlung erfolgen kann. Die zweite Kühlvorrichtung 220, wie auch die erste Kühlvorrichtung 210, kann eine Kompressionskälteanlage oder Absorptionskälteanlage sein, wie sie oben beschrieben wurden, wobei, wenn gewünscht auf einen Zwischenkreislauf für ein Kälteträgermedium verzichtet werden kann. Alternativ kann die zweite Kühlvorrichtung 220 als Wärmepumpe arbeiten. Die elektrische Antriebs-Energieversorgung der zweiten Kühlvorrichtung 220 erfolgt durch eine (regenerative) Energieerzeugungsanlage 230. Kaltwasser gelangt aus einem Eiswasser- und Kaltwassertank 240 über Leitungen a, a* zu der zweiten Kühlvorrichtung 220, wird in der zweiten Kühlvorrichtung 220 gekühlt und über die Leitung b als Eiswasser in dem Eiswasser- und Kaltwassertank 240 eingelagert. Alternativ oder zusätzlich kann mithilfe der zweiten Kühlvorrichtung 220 eine Kühlung von Kaltwasser innerhalb des Eiswasser- und Kaltwassertanks 240 über entsprechende Vorrichtungen innerhalb des Eiswasser- und Kaltwassertanks 240 erfolgen.

Über die Leitung d werden Abwärme und dissipierte Antriebsenergie von der zweiten Kühlvorrichtung 220 in einem oberen Bereich des Eiswasser- und Kaltwassertanks 240 zum Erwärmen eines Teils des Kaltwassers eingespeist und kann auch (wie oben mit Bezug auf die in Figur 1 gezeigte Leitung f beschrieben) zum Teil zur Temperierung eines Teils des von der zweiten Kühlvorrichtung 220 zu kühlenden aus dem Eiswasser- und Kaltwassertank 240 gelieferten Kaltwassers verwendet werden. Das im oberen Bereich des Eiswasser- und Kaltwassertanks 240 erwärmte Kaltwasser (beispielsweise mit 25 °C) kann über eine Leitung e bei Bedarf einem Kaltwasserverbraucher und/oder einem Warmwasserverbraucher zugeführt werden. Wenn das erwärmte Kaltwasser einem Warmwasserverbraucher zugeführt wird, dann ist darunter zu verstehen, dass das erwärmte Kaltwasser in der Regel einem Wassermischer zum Ausmischen von Wasser für eine bestimmte Temperatur in welchem Kaltwasser und Warmwasser auf die gewünschte Temperatur (zum Beispiel für Einmaischwasser beispielhaft auf eine Temperatur von 55 °C) gemischt werden, zugeführt wird. Wenn anstelle von Kaltwasser (beispielhaft mit 15 °C) das erwärmte Kaltwasser (beispielhaft mit 25 °C) zum Ausmischen mit Warmwasser (80 °C) verwendet wird, dann benötigt man weniger Warmwasser, was gegebenenfalls mit Primärenergie erzeugt werden musste. Gespeist wird der Eiswasser- und Kaltwassertank 240 über die Leitung g, wobei, wie mit Bezug auf Figur 1 oben beschrieben, eine Kühlung von dem in den Eiswasser- und Kaltwassertank 240 eingeleiteten Kaltwasser über Wärmeaustausch mit filtriertem Bier oder direkt aus einem Lager-/Gärtank stammenden Bier oder Bier aus einem anderen Ort zwischen dem Lager-/Gärtank und der Abfüllung (relevant ist lediglich, dass die im Bier enthaltene "Kälteenergie" entzogen wird) vorausgehen kann.

Die Würzekühlung ist in einer Brauerei ein energetisch besonders aufwendiger Prozess, der von einem einstufigen oder mehrstufigen Würzekühler ausgeführt wird. Beispielhaft umfasst die in Figur 2 gezeigte Ausführungsform einen zweistufigen Würzekühler mit einer ersten Würzekühlerstufe 250 und einer zweiten Würzekühlerstufe 260. In einer ersten Würzekühlerstufe 250 erfolgt über einen Wärmetauscher eine erste Abkühlung der Würze, beispielsweise von 99 °C auf 83 °C. Hierbei wird ein Wärmeträgermedium (beispielsweise Wasser) aufgeheizt, beispielsweise auf eine Temperatur von 96 °C, und einem Energiespeichertank 270 zugeführt. Von dem Energiespeichertank 270 wird das Medium bei Bedarf einem Wärmeverbraucher 290, beispielsweise einem Maischgefäß 290 als Heizmedium, zugeführt und nach Abkühlung in dem Wärmeverbraucher 290 wieder in den Energiespeichertank 270 zurückgeführt, um wieder, beispielhaft mit 80 °C, zur Würzekühlung in der ersten Würzekühlerstufe 250 bereitzustehen.

Nach Abkühlung der Würze in der ersten Würzekühlerstufe 250, beispielsweise auf eine Temperatur von 83 °C, unterliegt die Würze einer weiteren Kühlung in der zweiten Würzekühlerstufe 260. Optional könnte nachfolgend eine dritte Würzekühlerstufe vorgesehen sein. In der dritten Würzekühlerstufe kann die Würze beispielsweise mit einem Kältemittel (beispielhaft NH₃) oder beispielsweise mit einem Kälteträger (beispielhaft Glykol) gekühlt werden. Nach vollständiger Kühlung wird die Würze beispielsweise mit einer Temperatur von 10 °C in den Gärkeller geleitet.

Die Kühlung der Würze in der zweiten Würzekühlerstufe 260 erfolgt mithilfe des in dem Eiswasser- und Kaltwassertank 240 gespeicherten und über die Leitung c ausgeleiteten Eiswassers, das mithilfe der zweiten Kühlvorrichtung 220 erzeugt wurde. Durch den Wärmeaustausch mit der Würze wird das Eiswasser auf eine Warmwassertemperatur von beispielsweise 80 °C erwärmt und zumindest teilweise über die Leitung h einem Warmwasserspeicher 280 zum Zwischenspeichern zugeführt. Von diesem Warmwasserspeicher kann das so erzeugte Warmwasser einem Warmwasserverbraucher bei Bedarf zugeführt werden. Sowohl der Energiespeichertank 270 als auch der Warmwasserspeicher 280 sind als Zwischenspeicher optional vorgesehen. Beispielsweise kann das in der zweiten Würzekühlerstufe 260 erwärmte Eiswasser dem Maischgefäß 290 als Teil eines Einmaischwassers zugeführt werden. Ein weiterer Teil des Einmaischwassers kann aus dem oberen Bereich des Eiswasser- und Kaltwassertanks 240 über die Leitung e, d.h. als über die zweite Kühlvorrichtung 220 rekuperativ vorgewärmtes Kaltwasser, zugeführt werden, um so die gewünschte Menge- und Temperatur des Einmaischwassers zu erhalten. Bevorzugt wird jedoch die gewünschte Temperatur des Warmwassers (beispielhaft 55 °C) für Warmwasserverbraucher (beispielhaft Einmaischwasser) unmittelbar vor der Zuführung zum Warmwasserverbraucher in einem Mischventil gemischt. Das dazu benötigte Warmwasser (beispielhaft mit 55 °C) kann aus dem Warmwasserspeicher 280 (beispielhaft mit 80 °C) und dem Eiswasser- und Kaltwassertank 240 (beispielhaft mit 25 °C) stammen. Ein Teil des in der zweiten Würzekühlerstufe 260 erwärmten Eiswassers kann über eine optionale Rücklaufbeimischungsleitung i mit dem zur Würzekühlung aus dem Eiswasser- und Kaltwassertank 240 gelieferten Eiswasser gemischt werden, um so den Kühlprozess in Abhängigkeit von der Temperatur des in dem Eiswasser- und Kaltwassertank 240 bereitgestellten Eiswassers variabel zu steuern, bzw. um die zu erzeugende Warmwassermenge zu steuern.

Auch wenn, wie mit der Figur 2 beschrieben, das Warmwasser für Warmwasserverbraucher aus dem Warmwasserspeicher 280 stammt, so ist es auch möglich (nicht gezeigt), dass das Warmwasser just in time erzeugt wird. In diesem Fall wird beispielsweise vom Eiswasser- und Kaltwassertanks 240 über die Leitung e einem Wärmetauscher, welcher mit Wärmeträgermedium vom Energiespeichertank 270 versorgt wird, Warmwasser erzeugt und beispielsweise einem Maischgefäß 290 (optional über einen Wassermischer) Einmaischwasser zugeführt wird. Das Wärmeträgermedium zirkuliert im Kreislauf über den Energiespeichertank 270 und den Wärmetauscher. Die im Wärmeträger enthaltene Energie wird genutzt, um das kalte Wasser zu erwärmen. Der Wärmeträger verlässt den Energiespeichertank 270 aus einem oberen Bereich und wird abgekühlt wieder in einem unteren Bereich bzw. beispielsweise temperaturabhängig mittels einer Schichtladelanze in den Energiespeichertank 270 zurückgeleitet.

Auch wenn in der Figur 2 nicht dargestellt, so kann die Würze zwar auch mithilfe des in dem Eiswasser- und Kaltwassertank 240 gespeicherten und über die Leitung c ausgeleiteten Eiswassers gekühlt werden. Durch den Wärmeaustausch mit der Würze wird das Eiswasser jedoch auf eine höhere Warmwassertemperatur erwärmt als in der zweiten Würzekühlerstufe 260 der in der Figur 2 beschrieben Ausführung und dient erstmal als Heizmedium für einen Wärmeverbraucher. Beispielsweise wird das Eiswasser auf 96 °C erwärmt und wird optional in einem Warmwasserspeicher zwischengespeichert. Von diesem Warmwasserspeicher kann das erzeugte Warmwasser mit beispielsweise 96°C einem Wärmeverbraucher wie beispielhaft einem Maischgefäß 290 als Heizmedium zum Aufheizen der Maische oder einem Läuterwürzeerhitzer zum Aufheizen der abgeläuterten Würze, zugeführt werden. Das abgekühlte Heizmedium (Warmwasser mit beispielsweise 80 °C) kann dann optional in einem Warmwassertankt zwischengespeichert werden und wird dann einem Warmwasserverbraucher (zum Beispiel einer Abläutervorrichtung als Anschwänzwasser oder einem Maischgefäß als Einmaischwasser) zugeführt. In diesem Ausführungsbeispiel handelt es sich um einen einstufigen Würzekühler oder einem zweistufigen Würzekühler, welcher in der zweiten Stufe die Würze mit einem Kältemittel oder Kälteträger auf die gewünschte Temperatur kühlt. Der optionale Warmwasserspeicher, welcher das abgekühlte Warmwasser, welches von einem Wärmeverbraucher stammt, zwischenspeichert, kann mit einer rekuperativen Wärmerückgewinnung wie beispielsweise einem Pfannendunstkondensator verbunden sein. So kann das (eventuell zu stark) abgekühlte Warmwasser wieder effektiv erwärmt werden. Anstelle eines Pfannendunstkondensators kann auch beispielsweise eine Solarthermieanlage verwendet werden, um das abgekühlte Warmwasser wieder zu erwärmen.

Wenn in einem mehrstufigen Würzekühler in der ersten Stufe 250 die Abkühlung der Würze mit einem Wärmeträgermedium erfolgt, so besteht der Vorteil, dass weniger Eiswasser für die Abkühlung des gesamten Suds benötigt wird. Somit kann die zweite Kühlvorrichtung 120, 220 kleiner ausgelegt werden, was wiederum Anschaffungs- und Wartungskosten reduziert. Zudem wird mit dem Wärmeträger ein Wärmeverbraucher rekuperativ versorgt, was wiederrum den Bedarf an Primärenergie reduziert.

Ein weiterer Vorteil besteht, wenn in einem mehrstufigen Würzekühler in der ersten Stufe 250 die Abkühlung der Würze mit einem Wärmeträger erfolgt und die Eiswassertemperatur gleichzeitig erhöht werden kann, beispielsweise von 3 °C auf 6 °C. Somit benötigt die zweite Kühlvorrichtung 120, 220 weniger elektrische Energie. Da in dieser Ausführung die Energie der Würze in der ersten Stufe 250 des Würzekühlers für die Erwärmung des Wärmeträgers verwendet wird, würde bei gleicher Eiswassertemperatur weniger Warmwasser erzeugt werden, als wenn die Energie des gesamten Suds für die Warmwassererzeugung verwendet wird. Durch Anhebung der Eiswassertemperatur (beispielsweise von 3 °C auf 6 °C) wird ein größeres Volumen von Warmwasser erzeugt. Somit kann man trotz der vorherigen Energieauskopplung ähnlich viel Warmwasservolumen erzeugen wie ohne Energieauskopplung, jedoch mit einem geringeren Energiebedarf an der Kühleinrichtung 120, 220.

Die einzelnen Prozessschritte, die innerhalb der Anlage 100 oder 200 ausgeführt werden, insbesondere der Betrieb der ersten Kühlvorrichtung 110, 210 und der zweiten Kühlvorrichtung 120, 220 können über eine Steuerungs-/Regeleinrichtung der Anlage 100, 200 gesteuert/geregelt werden.

Wie beschrieben kann die in den Anlagen 100 und 200 vorgesehen zweite Kühlvorrichtung 120 beziehungsweise 220 auf das der zweiten Kühlvorrichtung 120 beziehungsweise 220 zugeführte zu kühlende Kaltwasser (das beispielsweise eine im Wesentlichen immer gleiche Temperatur aufweisen kann) und geforderte Temperaturen wie auch Volumina des zu erzeugenden Eiswassers optimal abgestimmt werden. So kann für jeden Sud (beispielsweise in Abhängigkeit der zu produzierenden Biersorte) in einer Brauerei genau die benötigte Eiswassermenge mit der benötigten Temperatur vorproduziert und zwischengespeichert werden. Insbesondere wenn nur Eiswassertemperaturen von über 3 ° C zur Würzekühlung in einer Brauerei erforderlich sind, da in einer ersten Würzekühlerstufe vor der Verwendung des Eiswassers als Kühlmittel eine erste Würzekühlung erfolgt, in der ein Teil der Wärme der Würze rekuperativ wiedergewonnen wird, lassen sich sehr hohe Nutzungsgrade beziehungsweise Energy Efficiency Ratio, beispielsweise ein EER von über 6, erreichen. Dadurch ist die von der Energieerzeugungsanlage 130 beziehungsweise 230 bereitzustellende elektrischen Antriebs-Energiemenge signifikant niedriger als die zur Erzeugung von Eiswasser in einer herkömmlichen Brauerei erforderliche Energiemenge. Insbesondere kann die zweite Kühlvorrichtung 120 beziehungsweise 220 in Zeiten, in denen keine Eiswassererzeugung erforderlich ist, im energiesparenden Standby-Modus versetzt werden, da sie ja separat von der die übrigen Kälteverbraucher der Anlage/Brauerei versorgenden ersten Kühlvorrichtung 110 beziehungsweise 210 ausgebildet ist und die beiden Kühlvorrichtungen unabhängig voneinander betrieben werden können.

Beispielhaft wird in einem herkömmlichen Sudhaus mit einer zentralen Kälteanlage zur Erzeugung von Eiswasser pro Sud für die Kühlung von 100 hl Kaltwürze unter Verwendung von Kaltwasser mit einer Temperatur von 15 °C und Eiswasser mit einer Temperatur von 7 °C ein elektrischer Energiebedarf der zentralen Kälteanlage von 50 kWh benötigt, um eine Kühlenergiemenge für die Eiswasserproduktion von168 kWh bereit zu stellen. Folglich werden im Verlauf der Würzekühlung pro Sud 218 kWh Wärmeenergie an die Umgebung abgegeben (gehen verloren). Die erfindungsgemäß bereitgestellte separate und nur für die Eiswasserproduktion ausgelegte Kühlvorrichtung (beispielsweise die zweite Kühlvorrichtung 120 oder 220) kann hingegen mit einem elektrischen Energiebedarf von lediglich 14 kWh pro Sud (also lediglich 28 % der im herkömmliche Sudhaus benötigten elektrische Energiemenge) eine Kühlenergie für die Eiswasserproduktion von 110 kWh pro Sud bereitstellen, die für die Würzekühlung ausreicht, wenn die mit Bezug auf die Figur 2 beschriebene rekuperative Wärmegewinnung in der ersten Würzekühlerstufe 250 vorgesehen ist. Die abzuführende Energiemenge von 124 kWh pro Sud muss nicht verloren gehen (d.h. wird nicht an die Umwelt abgegeben und bleibt im System), sondern kann beispielsweise in dem oberen Bereich des in der Figur 2 gezeigten Eiswasser- und Kaltwassertank 240 zwischengespeichert werden, dies entspricht einem Gesamtenergieunterschied von 342 kWh / 100hl.

Wenn oben die Rede von Gär- und/oder Lagertanks ist, dann sind darunter auch Gär- und/oder Reifereaktoren für die kontinuierliche Bierherstellung umfasst.

Unter einer Abläutervorrichtung wird insbesondere ein Läuterbottich oder Maischefilter verstanden oder jede andere Einrichtung, welche für eine Flüssig-/Festtrennung der Maische in Würze und Treber geeignet ist.

Auch wenn stets die Rede davon ist, dass die Abwärme und dissipierte Antriebsenergie der zweiten Kühlvorrichtung dem Kaltwassertank beziehungsweise dem kombinierten Eiswasser- und Kaltwassertank zugeführt wird, so ist es möglich, dass auch die Abwärme und dissipierte Antriebsenergie der ersten Kühlvorrichtung in den Kaltwassertank beziehungsweise in den kombinierten Eiswasser- und Kaltwassertank eingeleitet wird.

Das erzeugte Eiswasser kann nebst zur Kühlung von Würze oder Maische in einem Würzekühler beziehungsweise Maischekühler auch als Eiswasserverbraucher (Eiswassernutzer) verwendet werden. Das Eiswasser kann während des Maischprozesses zur Maische zugegeben werden und kühlt so die Maische ebenfalls ab; in diesem Fall ist das Eiswasser ein Teil des Maischwassers. Ein anderes Beispiel für Eiswasserverbraucher ist Wasser, welches zum Beispiel zum Blenden von Bier benötigt wird. Das Blending von Bier findet meist unmittelbar vor oder unmittelbar nach der Bierfiltration statt. Das Blendingwasser hat meist eine ähnliche kalte Temperatur wie das Bier. Somit muss das dafür benötigte Wasser vorab gekühlt werden. Meist handelt es sich um sauerstoffarmes Wasser, was bedeutet, dass dieses Wasser auch noch vorab entgast wird. In der Regel gibt es hierfür Entgasungsanlagen, welche zumindest einen Wärmetauscher zur Kühlung von Wasser und eine Einrichtung zum Entgasen von Wasser enthalten. Das gekühlte Wasser könnte jedoch auch aus dem Eiswassertank 140, 240 stammen.

## Patentansprüche

1. Anlage zur Getränkeherstellung (100, 200), insbesondere Bierherstellung, mit
einer ersten Kühlvorrichtung (110, 210), die zum Kühlen zumindest eines Mediums auf minimal eine erste Temperatur ausgebildet ist; und
einer zweiten Kühlvorrichtung (120, 220), die ausschließlich zum Erzeugen von Eiswasser durch Kühlen von Wasser auf minimal eine zweite Temperatur ausgebildet ist, die oberhalb der ersten Temperatur liegt, und die separat von der ersten Kühlvorrichtung (110, 210) ausgebildet ist.

2. Die Anlage (100, 200) gemäß Anspruch 1, in der die erste Kühlvorrichtung (110, 210) eine Kälteanlage, insbesondere eine Kompressionskälteanlage oder Absorptionskälteanlage, umfasst, und/oder die zweite Kühlvorrichtung (120, 220) eine Kälteanlage, insbesondere eine Kompressionskälteanlage oder Absorptionslkälteanlage, oder eine Wärmepumpe umfasst.

3. Die Anlage (100, 200) gemäß Anspruch 1 oder 2, weiterhin mit einem Eiswassertank zum Speichern von von der zweiten Kühlvorrichtung (120, 220) erzeugten Eiswasser, und wobei insbesondere die zweite Kühlvorrichtung (120, 220) zumindest teilweise in einer Entfernung von maximal 10 bis 50m von dem Eiswassertank angeordnet ist.

4. Die Anlage (100, 200) gemäß einem der vorhergehenden Ansprüche, weiterhin mit einem Kaltwassertank zum Speichern von Kaltwasser, wobei der Kaltwassertank mit der zweiten Kühlvorrichtung (120, 220) so verbunden ist, dass Abwärme und dissipierte Antriebsenergie der zweiten Kühlvorrichtung (120, 220) dem in dem Kaltwassertank gespeicherten Kaltwasser zugeführt wird.

5. Die Anlage (100, 200) gemäß Anspruch 4 in Kombination mit Anspruch 3, wobei der Kaltwassertank und der Eiswassertank ein und derselbe Tank (140, 240) sind.

6. Die Anlage (100, 200) gemäß einem der vorhergehenden Ansprüche, weiterhin mit einer regenerativen Energieerzeugungsanlage (130, 230) zur Erzeugung von elektrischer Antriebsenergie von zumindest der zweiten Kühlvorrichtung (120, 220), die insbesondere eine Photovoltaik-Anlage und/oder einer Windkraftanlage und/oder ein Blockheizkraftwerk umfasst.

7. Die Anlage (100, 200) gemäß einem der vorhergehenden Ansprüche, weiterhin mit einer rekuperativen Kühleinrichtung, die insbesondere einen Wärmetauscher (160) umfasst, die zum rekuperativen Kühlen von Wasser ausgebildet ist, das nachfolgend von der zweiten Kühlvorrichtung (120, 220) zum Erzeugen des Eiswassers gekühlt wird.

8. Die Anlage (100, 200) gemäß einem der vorhergehenden Ansprüche, wobei die Anlage eine Brauerei ist.

9. Die Anlage (100, 200) gemäß Anspruch 8 in Kombination mit Anspruch 7, die weiterhin einen Gär- und/oder Lagertank zum Lagern von Bier und insbesondere eine Filtrationseinrichtung (150) zur Filtration von zuvor in dem Gär- und/oder Lagertank gelagerten Bier umfasst, und die weiterhin eine erste Fördereinrichtung zum Fördern von Bier bei Lagertemperatur aus dem Gär- und/oder Lagertank und/oder insbesondere von Bier bei Filtrationstemperatur nach der Filtration durch die Filtrationseinrichtung (150) als Kältemittel zu der rekuperativen Kühleinrichtung umfasst.

10. Die Anlage (100, 200) gemäß Anspruch 8 oder 9, die weiterhin umfasst:
einen Wärmeverbraucher, insbesondere ein Maischgefäß (290) oder einen Läuterwürzeerhitzer;
einen Warmwasserverbraucher, insbesondere ein Maischgefäß (290) oder eine Abläutervorrichtung;
einen Würzekühler (250, 260) oder Maischekühler;
eine zweite Fördereinrichtung zum Fördern von von der zweiten Kühlvorrichtung (120, 220) erzeugtem Eiswasser zu dem Würzekühler (250, 260) zum Kühlen von Würze oder dem Maischekühler zum Kühlen von Maische; und
eine dritte Fördereinrichtung zum Fördern des in dem Würzekühler (250, 260) oder Maischekühler erhitzten Eiswassers zu dem Wärmeverbraucher oder zu dem Warmwasserverbraucher.

11. Die Anlage (100, 200) gemäß Anspruch 10 in Kombination mit Anspruch 4, weiterhin mit einer vierten Fördereinrichtung, die zum Fördern von in dem Kaltwassertank durch die Abwärme und dissipierte Antriebsenergie der zweiten Kühlvorrichtung (120, 220) erwärmten Kaltwassers zu dem Kaltwasserverbraucher und/oder Warmwasserverbraucher.

12. Anlage zur Getränkeherstellung (100, 200), insbesondere Bierherstellung, mit
einer ersten Kühlvorrichtung (110, 210), die zum Kühlen zumindest eines ersten Mediums auf minimal eine erste Temperatur ausgebildet ist; und
einer zweiten Kühlvorrichtung (120, 220), die ausschließlich zum Kühlen eines zweiten Mediums auf minimal eine zweite Temperatur ausgebildet ist, die unterhalb der ersten Temperatur liegt, und die separat von der ersten Kühlvorrichtung (110, 210) ausgebildet ist.

13. Verfahren zur Bereitstellung von Eiswasser zur Getränkeherstellung, insbesondere Bierherstellung, mit den Schritten:
Zuführen von Kaltwasser mit einer Kaltwassertemperatur zu einer ausschließlich zu einer Eiswassererzeugung bereitgestellten Kühlvorrichtung (120, 220); und
Kühlen des zugeführten Kaltwassers durch die ausschließlich zu einer Eiswassererzeugung bereitgestellten Kühlvorrichtung (120, 220) auf eine Eiswassertemperatur, die unterhalb der Kaltwassertemperatur liegt, um Eiswasser zu erzeugen.

14. Das Verfahren gemäß Anspruch 13, wobei das Verfahren mithilfe der Anlage (100, 200) gemäß einem der Ansprüche 1 bis 12 ausgeführt wird.
